# EUROPEAN PATENT APPLICATION

(11) **EP 4 418 030 A1**
(43) Date of publication of application: **21.08.2024**
(21) Application number: 22879971.4
(22) Date of filing: 12.08.2022
(51) Int. Cl.: G02B 6/42

(54) **OPTICAL RECEIVING ASSEMBLY AND OPTICAL MODULE**

(30) Priority: 13.10.2021 CN 202111192844
(71) Applicant: Innolight Technology (Suzhou) Ltd., Suzhou, Jiangsu 215000 (CN)
(72) Inventor: SUN, Yuzhou, Suzhou, Jiangsu 215000 (CN); LI, Xianyao, Suzhou, Jiangsu 215000 (CN); GUO, Defen, Suzhou, Jiangsu 215000 (CN); YU, Dengqun, Suzhou, Jiangsu 215000 (CN)
(74) Representative: Finnegan Europe LLP
(86) International application number: PCT/CN2022/112098
(87) International publication number: WO 2023/061024

(57) **Abstract**

An optical receiving assembly and an optical module. The optical receiving assembly comprises: a free-space wavelength division demultiplexer (10) having a multiplexed signal input port (12) and at least two multiplexed signal output ports (13), when the multiplexed signal input port (12) receives an optical signal having a plurality of adjacent wavebands, at least one of the multiplexed signal output ports (13) outputs an optical signal having nonadjacent wavebands; and a photonic integrated chip (30) on which a wavelength division demultiplexing member (31) is disposed, wherein the optical signal outputted from the multiplexed signal output ports (13) is divided by the wavelength division demultiplexing member (31) into optical signals of needed wavebands. The optical receiving assembly combines advantages of the free-space wavelength division demultiplexer (10) and the photonic integrated chip (30), and at least some adjacent wavebands in the optical signal are divided in advance before entering the photonic integrated chip (30), thereby avoiding high loss, crosstalk, low isolation, and other problems caused by the photonic integrated chip (30) dividing an optical signal having adjacent wavebands, and achieving wavelength division demultiplexing that has high isolation, low insertion loss, and low costs.

## Description

### TECHNICAL FIELD

The present invention belongs to the field of optical communication technology and more particularly relates to an optical receiving assembly and an optical module.

### BACKGROUND ART

As today's information society continues to develop, demand for optical transmission capacity and bandwidth is growing exponentially, and the demand for high-capacity optical interconnects is growing rapidly. It is well known that wavelength division multiplexing (WDM) technology is an effective means to increase the capacity of optical communications.

With respect to wavelength division demultiplexing in an optical receiving assembly, a conventional free-space wavelength division demultiplexing member has an advantage of high isolation, but the cost of an optical receiving assembly using a free-space wavelength division demultiplexing member is high due to the costs of coating and labor.

A photonic integrated chip integrates important devices such as a wavelength division demultiplexing member, a modulator, a high speed photodetector, and a laser; it not only enables wavelength division demultiplexing, but also effectively reduces the size of an optical module and improves integration. However, as the width, height, angle of inclination, and ambient temperature of a optical waveguide change, the center wavelength in the wavelength division demultiplexing member of the photonic integrated chip will change. As a result of processing difficulties in actuality, the width, height, angle of inclination, and ambient temperature at different locations of the optical waveguide are different. This leads to the photonic integrated chip to have undesirable wavelength division demultiplexing outcomes, as well as to disadvantages of high loss, crosstalk, and low isolation; this also results in failure to meet the requirement of flat top within a specific band for optical module demultiplexing.

### SUMMARY OF INVENTION

### TECHNICAL PROBLEM

The purpose of the present invention is to provide an optical receiving assembly and an optical module that achieve an overall outcome of high isolation, low insertion loss, and low cost in wavelength division demultiplexing.

### SOLUTION TO PROBLEM

### TECHNICAL SOLUTION

To achieve the invention purpose described above, one embodiment of the present invention provides an optical receiving assembly, comprising:

a free-space wavelength division demultiplexer having a multiplexed signal input port and at least two multiplexed signal output ports, when the multiplexed signal input port receives an optical signal having a plurality of adjacent wavebands, at least one of the multiplexed signal output ports outputs an optical signal having nonadjacent wavebands; and

a photonic integrated chip on which a wavelength division demultiplexing member is disposed, wherein the optical signal outputted from the multiplexed signal output ports is divided by the wavelength division demultiplexing member into optical signals of needed wavebands.

As a further improvement of one embodiment of the present invention, each of the multiplexed signal output ports outputs an optical signal having nonadjacent wavebands.

As a further improvement of one embodiment of the present invention, different ones of the multiplexed signal output ports output optical signals containing the same quantity of wavebands.

As a further improvement of one embodiment of the present invention, the free-space wavelength division demultiplexer has two multiplexed signal output ports, the multiplexed signal input port receives an optical signal having wavebands λ1 through λ2n, n being a natural number greater than 1, wherein an optical signal containing the odd numbered wavebands is outputted by one of the multiplexed signal output ports, and an optical signal containing the even numbered wavebands is outputted by another one of the multiplexed signal output ports.

As a further improvement of one embodiment of the present invention, the optical receiving assembly further comprises a coupler, an optical signal outputted from each of the multiplexed signal output ports is coupled by the coupler to the photonic integrated chip; and the photonic integrated chip further has disposed on it a coupling member, the coupling member receiving the optical signal outputted from the coupler and transmitting the optical signal to the wavelength division demultiplexing member.

As a further improvement of one embodiment of the present invention, the coupling member is configured to be an edge coupler, and the coupler is configured to be one or more focusing lenses.

As a further improvement of one embodiment of the present invention, the wavelength division demultiplexing member is any one of a cascaded Mach-Zehnder interferometer (MZI), an AWG structure, an Echelle grating structure, or an inverse Bragg grating directional coupler type demultiplexer.

As a further improvement of one embodiment of the present invention, the photonic integrated chip further has disposed on it a photodetecting member, each optical signal exiting from the wavelength division demultiplexing member is received and converted to an electrical signal by the photodetecting member for output.

As a further improvement of one embodiment of the present invention, the free-space wavelength division demultiplexer comprises at least two thin film filtering sheets disposed in free space, each of the thin film filtering sheets constituting one of the multiplexed signal output ports, the thin film filtering sheets filtering optical signals of different wavebands, respectively.

As a further improvement of one embodiment of the present invention, the free-space wavelength division demultiplexer comprises a transparent fixing block, the transparent fixing block has a first surface on which the multiplexed signal input port is disposed and a second surface on which the thin film filtering sheets are disposed, and the first surface and the second surface are parallel and opposite to one another; and

a portion of an area of the first surface has disposed on it a highly reflective film, an optical signal filtered and blocked by one of the thin film filtering sheets is reflected to the highly reflective film and is reflected by the highly reflective film to another one of the thin film filtering sheets.

As a further improvement of one embodiment of the present invention, the multiplexed signal input port may simultaneously receive two or more beams of optical signal, and each of the beams of optical signal is divided for output by different ones of the multiplexed signal output ports; and, the beams of optical signal outputted from the multiplexed signal output ports are divided by the wavelength division demultiplexing member into optical signals of needed wavebands, respectively.

To achieve the invention purpose described above, one embodiment of the present invention provides an optical module, comprising a housing and a circuit board packaged in the housing, the optical module further comprises the optical receiving assembly, and the photonic integrated chip of the optical receiving assembly is electrically connected to the circuit board.

### ADVANTAGEOUS EFFECTS OF INVENTION

### ADVANTAGEOUS EFFECTS

Compared with prior art, one embodiment of the present invention has the following advantageous effects: by the free-space wavelength division demultiplexer and the photonic integrated chip having disposed on it the wavelength division demultiplexing member, which are disposed in that order along an optical path, the optical signal is first divided by the free-space wavelength division demultiplexer, and at least one multiplexed signal output port outputs nonadjacent wavebands; next, the signal is divided into optical signals of needed wavebands by the wavelength division demultiplexing member in the photonic integrated chip. The optical receiving assembly combines advantages of the free-space wavelength division demultiplexer and the photonic integrated chip, and at least some adjacent wavebands in the optical signal are divided in advance before entering the photonic integrated chip. As a result, it achieves low cost, high integration, and small volume for products, and at the same time avoids a series of problems caused by the photonic integrated chip dividing an optical signal having adjacent wavebands, such as high loss, crosstalk, low isolation, and failure to meet the requirement of flat top within a specific waveband, thereby significantly improving the overall wavelength division demultiplexing outcome and thus achieving high isolation, low insertion loss, and low cost in wavelength division demultiplexing.

### BRIEF DESCRIPTION OF DRAWINGS

### DESCRIPTION OF DRAWINGS

Some specific embodiments of the present invention will be described in detail later in an exemplary and not limiting manner with reference to the drawings. Identical or similar parts or portions are labeled in the drawings with the same markings. Persons of skill in the art should understand that these drawings are not necessarily to scale.

FIG. 1 is a schematic diagram of an optical path of an optical receiving assembly of Embodiment 1 of the present invention;

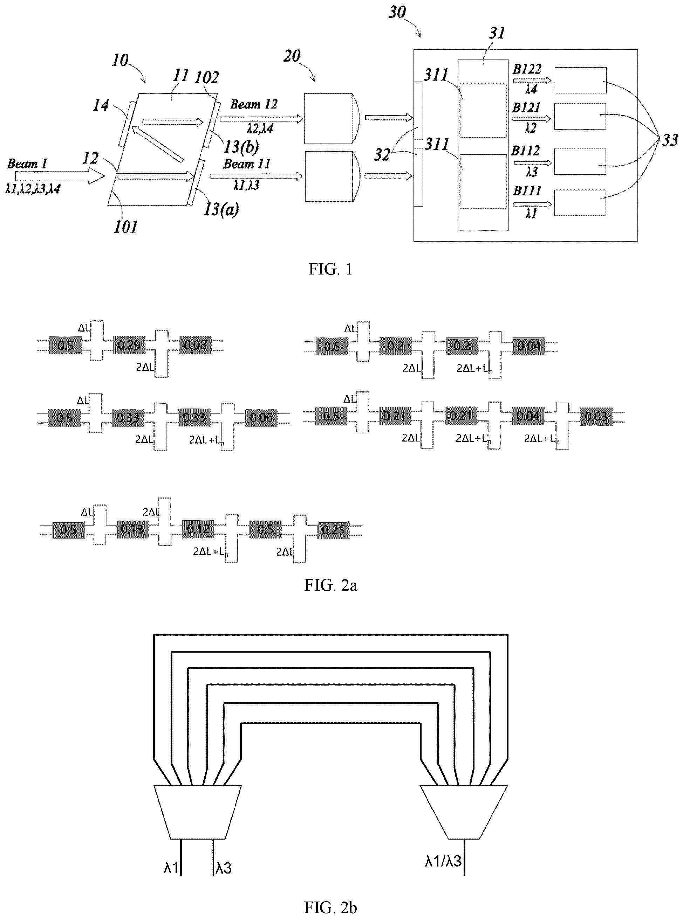

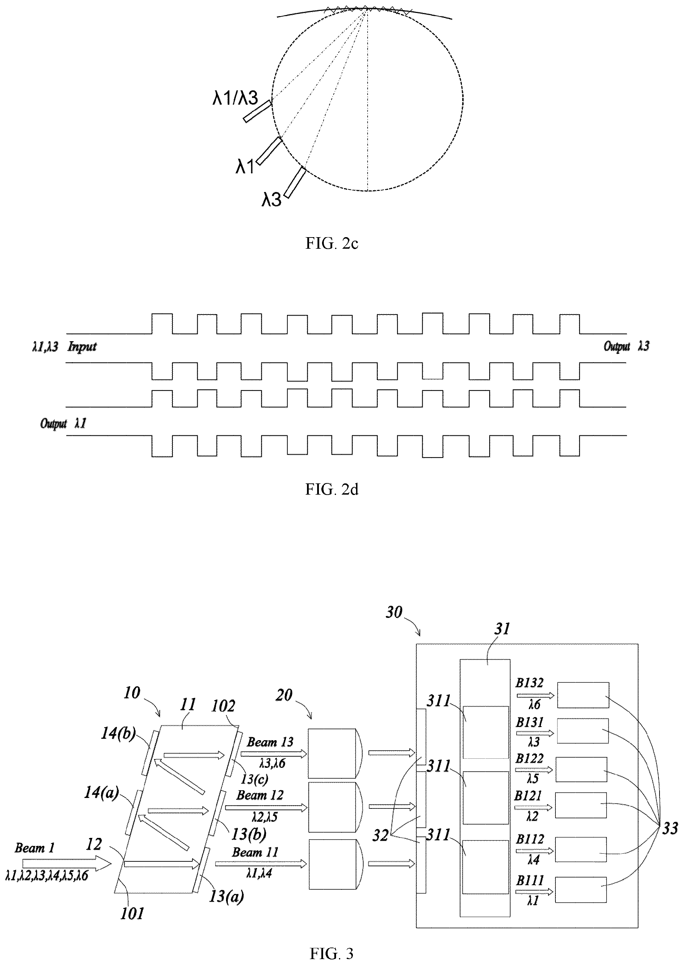

FIGs. 2a-2d are schematic diagrams of various alternative structures of a wavelength division demultiplexing member of a photonic integrated chip in the optical receiving assembly of Embodiment 1 of the present invention, and they illustrate wavelength division demultiplexing of an optical signal Beam11 in FIG. 1; here, the wavelength division demultiplexing member illustrated in FIG. 2a is a cascaded Mach-Zehnder interferometer, the wavelength division demultiplexing member illustrated in FIG. 2b is an arrayed waveguide grating (AWG), the wavelength division demultiplexing member illustrated in FIG. 2c is an Echelle grating, and the wavelength division demultiplexing member illustrated in FIG. 2d is a micro-ring demultiplexer;

FIG. 3 is a schematic diagram of an optical path of an optical receiving assembly of Embodiment 2 of the present invention;

FIG. 4 is a schematic diagram of an optical path of an optical receiving assembly of Embodiment 3 of the present invention.

### EMBODIMENTS OF THE INVENTION

### MODES FOR CARRYING OUT THE INVENTION

A detailed description of the present invention will be provided below in reference to specific embodiments illustrated in the drawings. However, these embodiments do not limit the present invention, and structural, methodological, or functional variations made by persons of ordinary skill in the art in accordance with these embodiments are included in the scope of protection of the present invention.

### Embodiment 1

FIG. 1 shows an optical receiving assembly of Embodiment 1 of the present invention, comprising a free-space wavelength division demultiplexer 10 and a photonic integrated chip 30.

The free-space wavelength division demultiplexer 10 is configured to divide an optical signal Beam1 received into two beams of optical signal Beam 1 1 and Beam 12 or more beams of optical signal. Specifically, the free-space wavelength division demultiplexer 10 has a multiplexed signal input port 12 and at least two multiplexed signal output ports 13. In the example illustrated in FIG. 1, the quantity of the multiplexed signal output ports 13 is two, which are identified as multiplexed signal output ports 13(a) and 13(b) to facilitate description; as mentioned previously, the quantity may be configured to be a larger number.

Here, the multiplexed signal input port 12 may be used for receiving the optical signal Beam1 that has a plurality of adjacent wavebands; for example, the optical signal Beam1 shown in FIG. 1 has sequentially adjacent wavebands λ1, λ2, λ3, etc. It needs to be noted that in the optical signal Beam1 in the present invention, the "plurality of adjacent wavebands" refers to a plurality of wavebands having an "adjacent" relationship when arranged from the largest to the smallest; for example, λ1<λ2<λ3; wavelengths of two adjacent wavebands may be immediately adjacent or separated apart.

And, when the multiplexed signal input port 12 receives the optical signal Beam1 that has a plurality of adjacent wavebands, upon demultiplexing by the free-space wavelength division demultiplexer, at least one multiplexed signal output port 13 outputs an optical signal having nonadjacent wavebands; in other words, any two wavebands in the optical signal outputted by the at least one multiplexed signal output port 13 are nonadjacent wavebands in Beam1. For example, the two wavebands λ1 and λ3 in the optical signal Beam11 outputted by one multiplexed signal output port 13(a) are nonadjacent wavebands in Beam1; rather, they are separated apart by the waveband λ2.

The photonic integrated chip 30 has disposed on it a wavelength division demultiplexing member 31, and the optical signal outputted from the multiplexed signal output ports 13 is divided by the wavelength division demultiplexing member 31 into optical signals of needed wavebands. For example, as shown in FIG. 1, an optical signal Beam11 outputted from the multiplexed signal output port 13(a) contains wavebands λ1 and λ3, and the optical signal Beam11 is divided by the wavelength division demultiplexing member 31 into an optical signal B111 having the waveband λ1 and a signal B112 having the waveband λ3.

As such, in the optical receiving assembly of the present invention, by the free-space wavelength division demultiplexer 10 and the photonic integrated chip 30 having integrated on it the wavelength division demultiplexing member 31, which are disposed in that order along an optical path, the optical signal Beam1 is first divided by the free-space wavelength division demultiplexer 10, and at least one multiplexed signal output port 13 outputs nonadjacent wavebands; next, the signal is divided into optical signals of needed wavebands by the wavelength division demultiplexing member 31 in the photonic integrated chip 30. The optical receiving assembly combines advantages of the free-space wavelength division demultiplexer 10 and the photonic integrated chip 30, and at least some adjacent wavebands in the optical signal are divided in advance before entering the photonic integrated chip 30. As a result, it achieves low cost, high integration, and small volume for products, and at the same time avoids a series of problems caused by the photonic integrated chip 30 dividing an optical signal having adjacent wavebands (e.g. λ1 and λ2), such as high loss, crosstalk, low isolation, and failure to meet the requirement of flat top within a specific waveband, thereby significantly improving the overall wavelength division demultiplexing outcome and thus achieving high isolation, low insertion loss, and low cost in wavelength division demultiplexing.

In a preferred embodiment, each of the multiplexed signal output ports 13 outputs an optical signal having nonadjacent wavebands. For example, in an optical signal Beam1 shown in FIG. 1, one multiplexed signal output port 13(a) outputs an optical signal Beam11 having nonadjacent wavebands, for example, wavebands λ1 and λ3; and another multiplexed signal output port 13(b) outputs an optical signal Beam12 also having nonadjacent waveband, for example, wavebands λ2 and λ4. In other words, as demultiplexed by the free-space wavelength division demultiplexer 10, any adjacent wavebands in the optical signal Beam1 are outputted by different multiplexed signal output ports 13. Then, at the same time when the aforementioned optical signal Beam11 is divided by the wavelength division demultiplexing member 31 into the optical signal B111 having the waveband λ1 and the optical signal B112 having the waveband λ3, the optical signal Beam12 outputted by the multiplexed signal output port 13(b) is divided by the wavelength division demultiplexing member 31 into the optical signal B121 having the waveband λ2 and the optical signal B 122 having the waveband λ4; thereby, any adjacent wavebands in the optical signal Beam1 are divided before reaching the photonic integrated chip 30, further improving the wavelength division demultiplexing outcome with higher isolation, lower insertion loss, and lower cost.

More preferably, different multiplexed signal output ports 13 output optical signals containing the same quantity of wavebands. For example, in the embodiment shown in FIG. 1, the quantity of the multiplexed signal output ports 13 is configured to be two, as described above; the multiplexed signal input port 12 receives an optical signal Beam1 having wavebands λ1 through λ2n, where n is a natural number greater than 1; here, an optical signal Beam11 containing the odd numbered wavebands λ1, λ3... is outputted by the multiplexed signal output port 13(a), and an optical signal Beam12 containing the even numbered wavebands λ2, λ4... is outputted by multiplexed signal output port 13(b). Of course, in a variant embodiment, the quantity of wavebands contained in an optical signal outputted by each of the multiplexed signal output ports may be 3 or a greater number. For example, in a variant embodiment, an optical signal Beam1 in FIG. 1 has wavebands λ1, λ2, λ3, λ4, λ5, and λ6; after wave division, an optical signal Beam11 may have the wavebands λ1, λ3, and λ5, and an optical signal Beam12 may have the wavebands λ2, λ4, and λ6. Or, in another variant embodiment, the quantity of the multiplexed signal output port 13 is configured to be a greater number, for example, 3. The multiplexed signal input port 12 receives an optical signal having wavebands λ1 through λ3n, where n is a natural number greater than 1; here, an optical signal containing the wavebands λ1, λ4... is outputted by one multiplexed signal output port 13, an optical signal containing the wavebands λ2, λ5... is outputted by another multiplexed signal output port 13, and an optical signal containing the wavebands λ3, λ6... is outputted by yet another multiplexed signal output port 13. And so on; further details will not be repeated here.

It can be understood that in other variant embodiments besides those illustrated by the preceding examples: optical signals outputted by different multiplexed signal output ports 13 may contain different quantities of wavebands. For example, an optical signal Beam1 has three wavebands λ1, λ2, and λ3; an optical signal outputted by one multiplexed signal output port 13 has nonadjacent wavebands, i.e., the wavebands λ1 and λ3, while an optical signal outputted by another multiplexed signal output port 13 has the waveband λ2. Or, a portion of the multiplexed signal output ports 13 output optical signals having nonadjacent wavebands, while the rest of the multiplexed signal output ports 13 output optical signals having adjacent wavebands. For example, an optical signal Beam1 has four wavebands λ1, λ2, λ3, and λ4; an optical signal outputted by one multiplexed signal output port 13 has nonadjacent wavebands, i.e. the wavebands λ1 and λ4, while an optical signal outputted by another multiplexed signal output port 13 have adj acent wavebands, i.e. the wavebands λ2 and λ3. These variant embodiments do not depart from the technical tenet of the present invention. In the present embodiment, the free-space wavelength division demultiplexer 10 comprises two thin film filtering sheets disposed in free space, each of the thin film filtering sheets constituting one of the multiplexed signal output ports 13, the thin film filtering sheets filtering optical signals of different wavebands, respectively. Understandably, corresponding to the quantity of the multiplexed signal output ports 13, the quantity of thin film filtering sheets illustrated in the present embodiment is two; and, when the quantity of the multiplexed signal output ports 13 is configured to be a greater number, the quantity of the thin film filtering sheets is correspondingly a greater number.

More specifically, in the present embodiment, the free-space wavelength division demultiplexer 10 comprises a transparent fixing block 11. The transparent fixing block 11 has a first surface 101 on which the multiplexed signal input port 12 is disposed, and a second surface 102 on which the thin film filtering sheets are disposed; the first surface 101 and the second surface 102 are parallel and opposite to one another, and form acute angles with respect to an optical signal Beam1 received by the free-space wavelength division demultiplexer 10.

A highly reflective film 14 is disposed on a portion of an area of the first surface 101; an optical signal filtered and blocked by one of the thin film filtering sheets (e.g. a thin film filtering sheet that constitutes the multiplexed signal output port 13(a) in the drawing) is reflected to the highly reflective film 14 and is reflected by the highly reflective film 14 to another one of the thin film filtering sheets (e.g. a thin film filtering sheet that constitutes the multiplexed signal output port 13(b) in the drawing).

The transparent fixing block 11 and the thin film filtering sheets described above are simply a specific structure of a Z-block form of the free-space wavelength division demultiplexer 10, which is a thin film filter (TFF) wavelength division multiplexer. Specific implementation of the free-space wavelength division demultiplexer 10 is not limited to this.

Furthermore, the photonic integrated chip 30 has disposed on it a photodetecting member 33. Each optical signal, such as B111, B112, B121, and B122, exiting from the wavelength division demultiplexing member 31 is received and converted to an electrical signal by the photodetecting member 33 for output. As such, the photodetecting member 33 of the photonic integrated chip 30 performs optical-electrical signal conversion, which results in the optical receiving assembly having advantages of high waveband detection, fast response, and high integration.

Here, the photodetecting member 33 may comprise a plurality of photodetecting components arranged in an array, and the quantity of these photodetecting components is no less than the quantity of wavebands contained in the optical signal Beam1 received by the multiplexed signal input port 12; for example, in FIG. 1, the photodetecting components are configured to be 4 and to perform detection and optical-electrical conversion of the optical signals B111, B112, B121, and B122, respectively.

In the present embodiment, the optical receiving assembly further comprises a coupler 20 disposed between the free-space wavelength division demultiplexer 10 and the photonic integrated chip 30. An optical signal outputted by each of the multiplexed signal output ports 13 is coupled by the coupler 20 to the photonic integrated chip 30.

The photonic integrated chip 30 also has disposed on it a coupling member 32. The coupling member 32 receives an optical signal from the coupler 20 and transmits the optical signal to the wavelength division demultiplexing member 31, and the optical signal is divided by the wavelength division demultiplexing member 31 and then transmitted to the photodetecting member 33.

Specifically, the coupling member 32 is configured to be an edge coupler, such as a spot size converter. The coupler 20 may be configured to be one or a plurality of focusing lenses, such as convex lenses or plano-convex lenses. As such, an optical signal outputted by each multiplexed signal output port 13 is focused and coupled by the coupler 20 onto the coupling member 32 of the photonic integrated chip 30, and is then coupled by the coupling member 32 into the wavelength division demultiplexing member 31. Of course, as described here, the coupling member 32 embodied as an edge coupler and the coupler 20 embodied as a focusing lens are only one specific example of the coupling means between the free-space wavelength division demultiplexer 10 and the wavelength division demultiplexing member 31 on the photonic integrated chip 30 in the present invention; the coupling means between the free-space wavelength division demultiplexer 10 and the wavelength division demultiplexing member 31 on the photonic integrated chip 30 is not limited to this.

Furthermore, the wavelength division demultiplexing member 31 on the photonic integrated chip 30 comprises a number of wavelength division demultiplexing units 311; as illustrated in the drawing, the quantity of the wavelength division demultiplexing units 311 is two and is consistent with the quantity of the multiplexed signal output ports 13. As such, each wavelength division demultiplexing unit 311 may be used for receiving an optical signal outputted by its corresponding multiplexed signal output port 13.

A specific structure of the wavelength division demultiplexing unit 311 may be a cascaded Mach-Zehnder interferometer (MZI) as shown in FIG. 2a, an AWG structure as shown in FIG. 2b, an Echelle grating structure as shown in FIG. 2c, an inverse Bragg grating directional coupler type demultiplexer as shown in FIG. 2d, or another wavelength division demultiplexing structure known in the art.

Therefore, the optical receiving assembly of the present embodiment has the following advantageous effects: by the free-space wavelength division demultiplexer 10 and the photonic integrated chip 30 having disposed on it the wavelength division demultiplexing member 31, which are disposed in that order along an optical path, the optical signal Beam1 is first divided by the free-space wavelength division demultiplexer 10, and at least one multiplexed signal output port 13 outputs nonadjacent wavebands; next, the signal is divided into optical signals of needed wavebands by the wavelength division demultiplexing member 31 in the photonic integrated chip 30. The optical receiving assembly combines advantages of the free-space wavelength division demultiplexer 10 and the photonic integrated chip 30, and at least some adjacent wavebands in the optical signal are divided in advance before entering the photonic integrated chip 30, thereby enabling greater separation between wavebands in an optical signal that enters the wavelength division demultiplexing member 31, thus making it easier to demultiplex the optical signal. As a result, it achieves low cost, high integration, and small volume for products, and at the same time avoids a series of problems caused by the photonic integrated chip 30 dividing an optical signal having adjacent wavebands, such as high loss, crosstalk, low isolation, and failure to meet the requirement of flat top within a specific waveband, thereby significantly improving the overall wavelength division demultiplexing outcome and thus achieving high isolation, low insertion loss, and low cost in wavelength division demultiplexing.

### Embodiment 2

FIG. 3 shows an optical receiving assembly of Embodiment 2 of the present invention; similarly, the optical receiving assembly comprises a free-space wavelength division demultiplexer 10, a coupler 20, and a photonic integrated chip 30, and similarly, the photonic integrated chip 30 has disposed on it a coupling member 32, a wavelength division demultiplexing member 31, and a photodetecting member 33.

The only differences between Embodiment 2 and the previously described Embodiment 1 are as follows:

In Embodiment 1, as previously illustrated in FIG. 1, the quantity of the multiplexed signal output ports 13 is configured to be two; the multiplexed signal input port 12 receives an optical signal Beam1 having wavebands λ1 through λ2n; here, an optical signal Beam11 containing the odd numbered wavebands λ1, k3... is outputted by the multiplexed signal output port 13(a), and an optical signal Beam12 containing the even numbered wavebands λ2, λ4... is outputted by multiplexed signal output port 13(b).

However, in Embodiment 2, as shown in FIG. 3, the quantity of the multiplexed signal output ports 13 is three, which are respectively identified as multiplexed signal output ports 13(a), 13(b), and 13(c). An optical signal Beam1 received by the multiplexed signal input port 12 has six wavebands λ1, λ2, λ3, λ4, λ5, and λ6, and is evenly divided for output by the three multiplexed signal output ports 13. Here, the multiplexed signal output port 13(a) outputs an optical signal Beam11 having the wavebands λ1 and λ4; the multiplexed signal output port 13(b) outputs an optical signal Beam12 having the wavebands λ2 and λ5; and the multiplexed signal output port 13(c) outputs an optical signal Beam13 having the wavebands λ3 and λ6.

And, in Embodiment 2, corresponding to the quantity of optical signals outputted by the free-space wavelength division demultiplexer 10, the quantity of the wavelength division demultiplexing components 311 of the wavelength division demultiplexing member 31 on the photonic integrated chip 30 is changed to three. In addition, corresponding to the quantity of wavebands contained in the optical signal Beam1 received by the free-space wavelength division demultiplexer 10, the quantity of the photodetecting components of the photodetecting member 33 on the photonic integrated chip 30 is changed to six.

Embodiment 2 in fact provides a variant embodiment of Embodiment 1 where the quantity of the multiplexed signal output ports 13 is greater; of course, in the present invention, the quantity of the multiplexed signal output ports 13 in the free-space wavelength division demultiplexer 10 may also be configured to be a greater number, such as four; no more drawings and examples are provided here.

### Embodiment 3

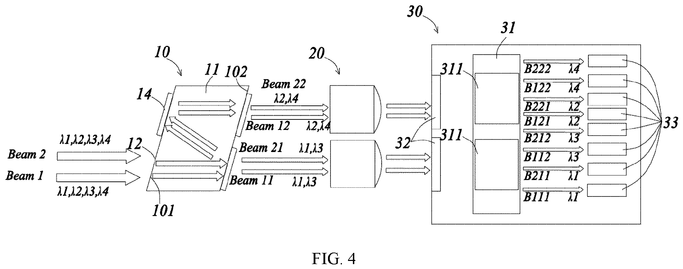

FIG. 4 shows an optical receiving assembly of Embodiment 3 of the present invention; similarly, the optical receiving assembly comprises a free-space wavelength division demultiplexer 10, a coupler 20, and a photonic integrated chip 30, and similarly, the photonic integrated chip 30 has disposed on it a coupling member 32, a wavelength division demultiplexing member 31, and a photodetecting member 33.

The only differences between Embodiment 3 and the previously described Embodiment 1 are as follows:

In Embodiment 1, as previously illustrated in FIG. 1, the multiplexed signal input port 12 receives one beam of optical signal Beam1, and the optical receiving assembly performs wavelength division demultiplexing on this beam of optical signal Beam 1.

However, in Embodiment 3, as illustrated in FIG. 4, the multiplexed signal input port 12 may simultaneously receive two or more beams of optical signal, and the optical receiving assembly performs wavelength division demultiplexing on each beam of optical signal respectively. Of course, in other embodiments, two wave division demultiplexers 10 arranged side-by-side may be used to perform demultiplexing on two beams of optical signal respectively.

Specifically, in Embodiment 3, as shown in FIG. 4, the multiplexed signal input port 12 may simultaneously receive two beams of optical signal Beam1 and Beam2. The optical signal Beam1 is divided for output by different multiplexed signal output ports 13. For example, the multiplexed signal output port 13(a) outputs an optical signal Beam11 having wavebands λ1 and λ3, and the multiplexed signal output port 13(b) outputs an optical signal Beam12 having wavebands λ2 and λ4. The optical signal Beam2 is divided for output by different multiplexed signal output ports 13. For example, the multiplexed signal output port 13(a) outputs an optical signal Beam21 having wavebands λ1 and λ3, and the multiplexed signal output port 13(b) outputs an optical signal Beam22 having wavebands λ2 and λ4.

And, the beams of optical signal outputted from the multiplexed signal output ports 13 are divided by the wavelength division demultiplexing member 31 into optical signals of needed wavebands, respectively. For example: for the two beams of optical signal Beam11 and Beam21 outputted by the multiplexed signal output port 13(a), the optical signal Beam11 is divided by the wavelength division demultiplexing member 31 into an optical signal B111 having the waveband λ1 and an optical signal B112 having the waveband λ3, and the optical signal Beam21 is divided by the wavelength division demultiplexing member 31 into an optical signal Beam211 having the waveband λ1 and an optical signal Beam212 having the waveband λ3; for the two beams of optical signal Beam12 and Beam22 outputted by the multiplexed signal output port 13(b), the optical signal Beam12 is divided by the wavelength division demultiplexing member 31 into an optical signal B121 having the waveband λ2 and an optical signal B122 having the waveband λ4, and the optical signal Beam22 is divided by the wavelength division demultiplexing member 31 into an optical signal Beam221 having the waveband λ2 and an optical signal Beam222 having the waveband λ4.

Additionally, the quantity of the photodetecting components of the photodetecting member 33 on the photonic integrated chip 30 is the same as the quantity of all wavebands contained in the beams of optical signal Beam received by the free-space wavelength division demultiplexer 10.

Of course, as illustrated in FIG. 4, the multiplexed signal input port 12 may simultaneously receive two beams of optical signal Beam1 and Beam2; and in variant embodiments, the multiplexed signal input port 12 may also simultaneously receive more beams of optical signal, and the wavelength division demultiplexing process is analogous to FIG. 4 and is not described in details here.

Moreover, the technical tenet of Embodiment 3 may also be applied to variant embodiments of the previously described Embodiment 2; similarly, on the basis of Embodiment 2, the multiplexed signal input port 12 is changed to allow it to simultaneously receive two or more beams of optical signal, and the optical receiving assembly performs wavelength division demultiplexing on each beam of optical signal respectively.

### Embodiment 4

Embodiment 4 provides an optical module comprising a housing, a circuit board, and an optical receiving assembly, the circuit board and the optical receiving assembly being packaged in the housing. Here, the optical receiving assembly is any one of the optical receiving assemblies of Embodiment 1 through Embodiment 3 above, and the photonic integrated chip of the optical receiving assembly is electrically connected to the circuit board.

An optical signal received by the optical module is demultiplexed by the free-space wavelength division demultiplexer of the optical receiving assembly and then coupled into the photonic integrated chip; the optical signal is further demultiplexed by the wavelength division demultiplexing member of the photonic integrated chip and is then converted to an electrical signal by the photodetecting member of the photonic integrated chip; next, the electrical signal is transmitted to the circuit board, processed by the circuit board, and then outputted by an electrical interface of the optical module.

It should be understood that despite the description of embodiments in the specification, each embodiment does not entail only one independent technical solution. The specification is written this way simply for the sake of clarity. Persons of skill in the art should treat the specification as a whole; the technical solutions in the embodiments may be combined in appropriate ways to form other embodiments that may be understood by persons of skill in the art.

The series of detailed descriptions above is only intended to provide specific descriptions of feasible embodiments of the present invention. They are not to be construed as limiting the scope of protection for the present invention; all equivalent embodiments or changes that do not depart from the technology of the present invention in essence should fall under the scope of protection of the present invention.

## Claims

1. An optical receiving assembly, **characterized in that** it comprises:
a free-space wavelength division demultiplexer having a multiplexed signal input port and at least two multiplexed signal output ports, when the multiplexed signal input port receives an optical signal having a plurality of adjacent wavebands, at least one of the multiplexed signal output ports outputs an optical signal having nonadjacent wavebands; and
a photonic integrated chip on which a wavelength division demultiplexing member is disposed, wherein the optical signal outputted from the multiplexed signal output ports is divided by the wavelength division demultiplexing member into optical signals of needed wavebands.

2. The optical receiving assembly according to claim 1, **characterized in that** each of the multiplexed signal output ports outputs an optical signal having nonadjacent wavebands.

3. The optical receiving assembly according to claim 2, **characterized in that** different ones of the multiplexed signal output ports output optical signals containing the same quantity of wavebands.

4. The optical receiving assembly according to claim 3, **characterized in that** the free-space wavelength division demultiplexer has two multiplexed signal output ports, the multiplexed signal input port receives an optical signal having wavebands λ1 through λ2n, n being a natural number greater than 1, wherein an optical signal containing the odd numbered wavebands is outputted by one of the multiplexed signal output ports, and an optical signal containing the even numbered wavebands is outputted by another one of the multiplexed signal output ports.

5. The optical receiving assembly according to claim 1, **characterized in that** the optical receiving assembly further comprises a coupler, an optical signal outputted from each of the multiplexed signal output ports is coupled by the coupler to the photonic integrated chip; and
the photonic integrated chip further has disposed on it a coupling member, the coupling member receiving the optical signal outputted from the coupler and transmitting the optical signal to the wavelength division demultiplexing member.

6. The optical receiving assembly according to claim 5, **characterized in that** the coupling member is configured to be an edge coupler, and the coupler is configured to be one or more focusing lenses.

7. The optical receiving assembly according to claim 1, **characterized in that** the wavelength division demultiplexing member is any one of a cascaded Mach-Zehnder interferometer (MZI), an AWG structure, an Echelle grating structure, or an inverse Bragg grating directional coupler type demultiplexer.

8. The optical receiving assembly according to claim 1, **characterized in that** the photonic integrated chip further has disposed on it a photodetecting member, each optical signal exiting from the wavelength division demultiplexing member is received and converted to an electrical signal by the photodetecting member for output.

9. The optical receiving assembly according to claim 1, **characterized in that** the free-space wavelength division demultiplexer comprises at least two thin film filtering sheets disposed in free space, each of the thin film filtering sheets constituting one of the multiplexed signal output ports, the thin film filtering sheets filtering optical signals of different wavebands, respectively.

10. The optical receiving assembly according to claim 9, **characterized in that** the free-space wavelength division demultiplexer comprises a transparent fixing block, the transparent fixing block has a first surface on which the multiplexed signal input port is disposed and a second surface on which the thin film filtering sheets are disposed, and the first surface and the second surface are parallel and opposite to one another; and
a portion of an area of the first surface has disposed on it a highly reflective film, an optical signal filtered and blocked by one of the thin film filtering sheets is reflected to the highly reflective film and is reflected by the highly reflective film to another one of the thin film filtering sheets.

11. The optical receiving assembly according to claim 1, **characterized in that** the multiplexed signal input port may simultaneously receive two or more beams of optical signal, and each of the beams of optical signal is divided for output by different ones of the multiplexed signal output ports; and, the beams of optical signal outputted from the multiplexed signal output ports are divided by the wavelength division demultiplexing member into optical signals of needed wavebands, respectively.

12. An optical module comprising a housing and a circuit board packaged in the housing, **characterized in that** the optical module further comprises the optical receiving assembly of claim 1, and the photonic integrated chip of the optical receiving assembly is electrically connected to the circuit board.
